Europäisches Patentamt

European Patent Office

Office européen des brevets

(11) Publication number: **0 090 113**
**B1**

(12) EUROPEAN PATENT SPECIFICATION

(45) Date of publication of patent specification: **25.04.90**

(21) Application number: **82305865.6**

(22) Date of filing: **04.11.82**

(51) Int. Cl.⁵: **E 21 F 13/02, E 02 F 3/348**

(54) Continuous loading apparatus and method.

(30) Priority: **06.11.81 CA 389652**

(43) Date of publication of application:
**05.10.83 Bulletin 83/40**

(45) Publication of the grant of the patent:
**25.04.90 Bulletin 90/17**

(84) Designated Contracting States:
**AT BE CH DE FR GB IT LI NL SE**

(56) References cited:
**DE-A-1 634 708**
**DE-A-1 634 864**
**GB-A-1 420 922**
**US-A-3 283 877**
**US-A-3 517 840**
**US-A-3 984 015**

(73) Proprietor: **INCO LIMITED**
**Royal Trust Tower Toronto-Dominion Centre**
**Toronto Ontario, M5K 1N4 (CA)**

(72) Inventor: **Hradil, John Helmut**
**208-13931 74th Avenue**
**Surrey British Columbia (CA)**
Inventor: **Bottomley, Frank**
**8530 Terrace Drive**
**Delta British Columbia, V4C 3Z2 (CA)**
Inventor: **Crawshay, Richard**
**215 Sandringham Crescent**
**North Vancouver British Columbia V5L 3J3 (CA)**

(74) Representative: **Greenstreet, Cyril Henry et al**
**Haseltine Lake Partners Motorama Haus 502**
**Rosenheimer Strasse 30**
**D-8000 München 80 (DE)**

Courier Press, Leamington Spa, England.

**Description**

The invention relates to a loading apparatus and method particularly adapted for, but not limited to, use in a confined space, for example in underground excavation.

In underground excavation, rock which has been fragmented by blasting is required to be removed from the working area. The rock or muck pile commonly has a steep angle of repose which is difficult to penetrate with loading apparatus during a mucking operation. If a loading apparatus requires a high tractive effort to penetrate the muck pile, slipping of the ground contacting means or mobile mounting means of the apparatus is common, resulting in rapid wear of the mobile mounting means and power train producing the tractive effort.

Loading apparatus for mucking operations have been known for many years and some types include one or more conveyor assemblies having a gathering device at one end, for example a bucket, a back hoe or a scraper adapted to load material onto a fixed apron or hopper for feeding onto a forward or first conveyor. The gathering devices sometimes require a high degree of operator skill, and usually suffer from a high wear rate and low capacity. Also if the bucket or scraper of the gathering device is used on an articulated boom, additional headroom for the boom is required. After loading onto the conveyor, the material passes up the conveyor and then is fed either directly into a wheeled conveyance or onto a second conveyor remote from the loading apparatus for transport away from the work area. The apparatus is usually mounted for mobility on wheels or tracks, i.e. the mobile mounting means and the apron of the primary conveyor is adapted to be advanced into the muck heap as the muck heap is depleted by the bucket or scraper. The apron of the conveyor assembly is forced into the muck heap by driving the apparatus forward, and this results in rapid wear of many components. Also excessive undulations or undesirable gradients of the ground supporting the apparatus, and resilience of tires or suspension often result in poor control of the scraper or apron, with consequent poor control of the gradient of the resulting road bed under the muck heap. The scraper or bucket of the gathering device usually loads the conveyor in a series of discrete feeding strokes interspersed with non-productive recovery strokes, and thus material is fed intermittently onto the apron reducing potential production.

Attempts have been made to reduce the intermittent nature of the feeding of material onto the conveyor by use of auxiliary or feeder conveyors designed to feed material onto the first conveyor at a more constant rate than buckets, etc., or by use of vibrating or reciprocating fingers adjacent a leading portion or apron of the main conveyor to loosen material in the muck pile to facilitate entry of the apron or penetrating lip as the conveyor is advanced into the muck pile. Devices using a feeder conveyor for feeding material onto the main conveyor are shown in US—A—3 391 776 (Hancock) and 3 574 327 (Golfi), but in these devices, scrapers on a lower run of the forward or feeder conveyor merely push material onto the secondary conveyor and cannot easily penetrate a muck heap. The conveyors can move relative to each other but this is usually for positioning purposes and such devices are considered inappropriate for use in a mine due to the wide range of sizes of material in a mucking operation and limited head room in a mine. Devices having vibrating or reciprocating fingers adjacent a leading portion of the main conveyor to assist in penetration of the muck heap are shown in US—A—1,855,998 (Shannon) and 1 878 037 (Vodoz). While these latter devices may be adequate for handling some materials, it is felt that these devices have an excessive number of parts exposed to wear when disturbing the muck pile and would not be appropriate for material normally encountered in the harsh environment of mucking operations in hard rock excavation. Other loading devices having a vibrating trough or plate adjacent the leading portion of the conveyor have been used in coal mining in combination with vibrating or shaker conveyors.

The plate is mounted directly on the conveyor to shake therewith, but such devices would be inappropriate to hard rock mining, and furthermore, are limited by very shallow angles of operation, thus requiring excessively long conveyors to achieve a reasonable discharge height.

A conveyor excavator in which a digging cutter which scoops up material is mounted pivotably on the front end of a conveyor is known from US—A—3 517 840, and it has also been proposed in DE—A—16 34 864 to vibrate the shovel of a conventional front end loader in order to facilitate filling the shovel. Both forms of apparatus are, however, unsuitable for use in confined spaces with restricted headroom.

It has now been found that the above-mentioned problems associated with loading and transporting material underground can be overcome by a modification of the loading and transporting device such as is disclosed in US—A—1 878 037, comprising a body mounted on wheels, tracks or the like and a conveyor assembly mounted on the body, the front portion of the apparatus having a single shallow penetrating means disposed normally to the centre line of the apparatus, the conveyor assembly including a front portion which is pivotably adjustable about a horizontal axis by the action of independent means.

In the apparatus according to the invention, the front portion of the conveyor assembly is pivotable up to substantially the horizontal position, the penetrating means is pivotable, independently of the front part of the conveyor, about a horizontal transverse axis disposed normally to the centre line and common to both the front portion of the conveyor assembly and the penetrating means, and independent pivoting means is provided for oscillating the penetrating means about said horizontal transverse axis through a predetermined arc.

The apparatus according to the invention is able to operate somewhat in the fashion of a front end loader, and the invention includes a continuous method of loading and transporting material on the continuous loading apparatus of the invention, consisting in the following steps:

(a) operating the conveyor assembly for transporting the material to be loaded from the front portion of the conveyor assembly to a rear portion thereof, and

(b) advancing the penetrating means into the material to be loaded by advancing the front portion of the apparatus, and

(c) continuously oscillating the penetrating means by the independent pivoting means, thereby fluidising the material and causing it to continuously flow on to the conveyor assembly,

(d) while raising the conveyor front portion as required to pass the penetrating means in a continuous path through the material to be loaded, and

(e) after each pass of the penetrating means through the material to be loaded, retreating the front portion of the apparatus, and

(f) repeating steps (a) through (3) until loading is completed.

The apparatus and method of the invention reduce difficulties and disadvantages of the prior art by enabling a penetrating means at a forward end of a main or primary conveyor assembly to be fed essentially continuously into a muck heap for a relatively long working stroke, without the use of a complex and separate gathering device, thus reducing headroom requirements and associated maintenance problems. During the working stroke, material from the heap is distributed onto the conveyor in an essentially continuous manner as the conveyor is advanced into the muck heap, and the material conveyed in one working stroke is sufficient to load completely a stationary receiving conveyance located adjacent the rear end of the apparatus.

In embodiments of the invention, means are provided to permit relative movement between the primary conveyor and a supporting body of the apparatus so that during each working stroke, mobile mounting structure, such as tires, tracks, etc., carrying the body of the loading apparatus is stationary and thus the primary conveyor by itself is advanced into the muck heap in a controlled line of action or desired plane. Thus path or sweep of the penetrating means of the apparatus is relatively independent of the ground inclination or roughness, consequently producing a final road bed of desired inclination. Also, weight can be transferred from the mobile mounting means onto extendable legs, thus further improving control of the sweep by improving attitude control and augmenting resistance to mucking forces. Because the supporting body is stationary during penetration of the muck heap, use of the tractive power train is reduced with consequent reduction in transmission and tire or track wear. Prior to initiation of the working stroke, the supporting body is set in a desired attitude by adjusting the extendable legs independently, and once the body attitude is set, in some embodiments there is little requirement for a high degree of operator skill as other functions can be made to be semi-automatic. In some embodiments, particular modes of oscillation of the penetrating means are automatically selected by monitoring loading conditions. Portions of the apparatus that penetrate the muck heap and produce the oscillations can be made rugged and wear resistant so as to reduce maintenance problems and actuating structure associated therewith is protected from contact with the muck heap.

As loading difficulty increases, the penetrating means is subjected to oscillation about a horizontal transverse axis to disturb the muck heap to facilitate loading of material onto the primary conveyor. The oscillation can be manually controlled reciprocation of the penetrating means at an amplitude and frequency determined by an operator. Alternatively, a semi-automatic oscillation can be initiated in which mucking conditions are sensed by the apparatus, and amplitude and frequency are automatically adjusted to search for optimum loading performance. In one alternative, the penetrating means can be raised to lighten mucking loads, and in another alternative the penetrating means can be subjected to two superimposed oscillations of widely differing frequencies and amplitudes.

A loading apparatus according to the invention has a supporting body and primary and secondary conveyor assemblies having respective forward and rear conveyor portions. The two conveyor assemblies are disposed along a longitudinal axis so that the rear portion of the primary conveyor assembly is disposed above the forward portion of the secondary conveyor assembly. The apparatus is characterized by an extension means and a penetrating means which cooperate as follows. The extension means extends from the body and supports the primary conveyor assembly to permit essentially axial movement between the primary and secondary conveyor assemblies. The penetrating means is mounted adjacent the forward portion of the primary conveyor and is adapted to be oscillated as it penetrates material to facilitate loading of the material onto the primary conveyor.

The apparatus can be operated in a manual mode which requires some degree of operator skill to select a frequency and amplitude of oscillation of the penetrating means. Alternatively in semi-automatic embodiments a sensor detects penetration or loading characteristics of material and an oscillating means is actuated which determines the frequency and amplitude of oscillation. Preferably as the resistance to penetration increases, the frequency of oscillation decreases and the amplitude increases, thus disturbing the material more effectively than merely forcing the penetrating means into the material.

A detailed disclosure following, related to drawings, describes preferred embodiments of the invention which however are capable of expression in structure and method other than those particularly described and illustrated.

Figure 1 is a simplified side elevation of an apparatus according to the invention shown in a retracted and lowered configuration,

Figure 2 is a simplified top plan of the invention shown in the retracted configuration of Figure 1,

Figure 3 is a simplified section on line 3—3 of Figure 1,

Figure 4 is a simplified fragmented side elevation of a forward portion of the invention shown in an extended configuration,

Figure 5 is a simplified fragmented detail section on line 5—5 of Figure 4,

Figure 6 is a simplified fragmented detail section on line 6—6 of Figure 4,

Figure 7 is a simplified and sectioned side elevation at enlarged scale of a forward portion of a primary conveyor assembly and associated penetrating means,

Figure 8 is a simplified fragmented side elevation of a forward portion of an alternative embodiment of oscillating means using a rotary actuator adjacent the primary conveyor,

Figure 9 is a simplified fragmented section taken generally on line 9—9 of Figure 8,

Figure 10 is a simplified fragmented side elevation of a forward portion of a second alternative embodiment of oscillating means using a hydraulic cylinder and rocker,

Figure 11 is a simplified combination hydraulic/electrical schematic of a semi-automatic oscillating means according to the invention,

Figure 12 is a simplified hydraulic/electrical schematic of an alternative semi-automatic oscillating means,

Figures 13—15 which appear on sheet 4 of the drawings, are simplified schematics, drawn in sequence, of modes of operation that are possible when operating the semi-automatic oscillating means of the Figure 12 embodiment,

Figure 16 is a simplified diagram of a third embodiment of a semi-automatic oscillating means using hydraulic cylinders in series to produce a compound oscillation, and

Figure 17 is a portion of a simplified hydraulic/electrical schematic used in conjunction with the embodiments of Figures 12 and 16.

Figures 1 through 4

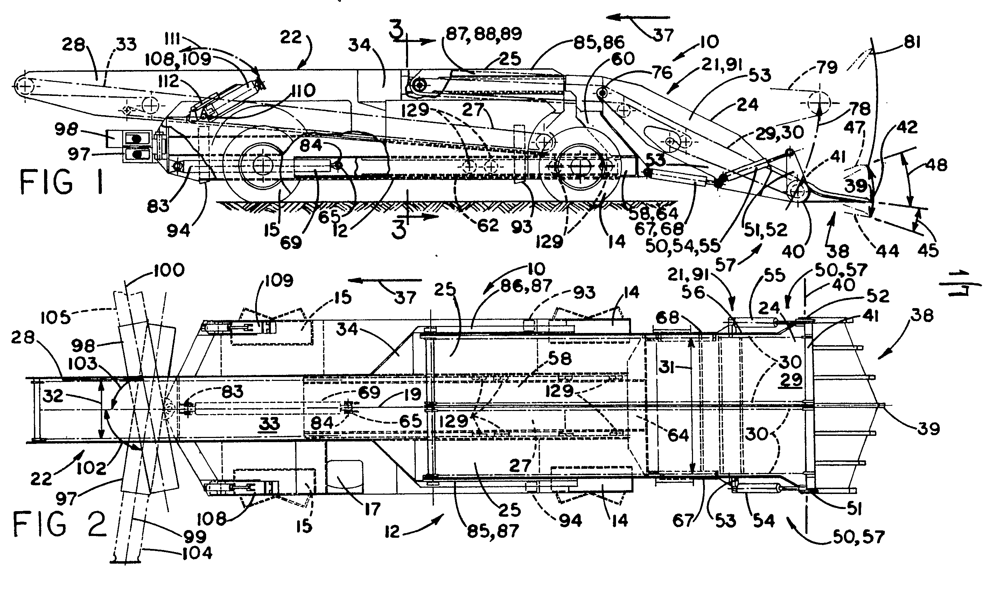

A loading apparatus 10 according to the invention has a supporting body 12 carried on forward and rear pairs of wheels 14 and 15 respectively. Each wheel is swivellable about an essentially vertical axis as shown in Figure 2 to permit conventional steering, steering for travelling in a straight line or in an arc, or for steering in which the vehicle moves both longitudinally and laterally simultaneously so as to maintain a longitudinal axis 19 of the vehicle at a constant angle to a datum, which steering is sometimes referred to as crab-like steering. The apparatus has an operator's seat 17 provided with controls to control, amongst other things, an electrical power unit 18 for use at an excavation face and areas where exhaust, heat or noise produces problems. A separate power unit 16, which is typically an internal combustion engine, is for use where exhaust, etc., are not problems. Alternatively the apparatus can be powered by one source of power.

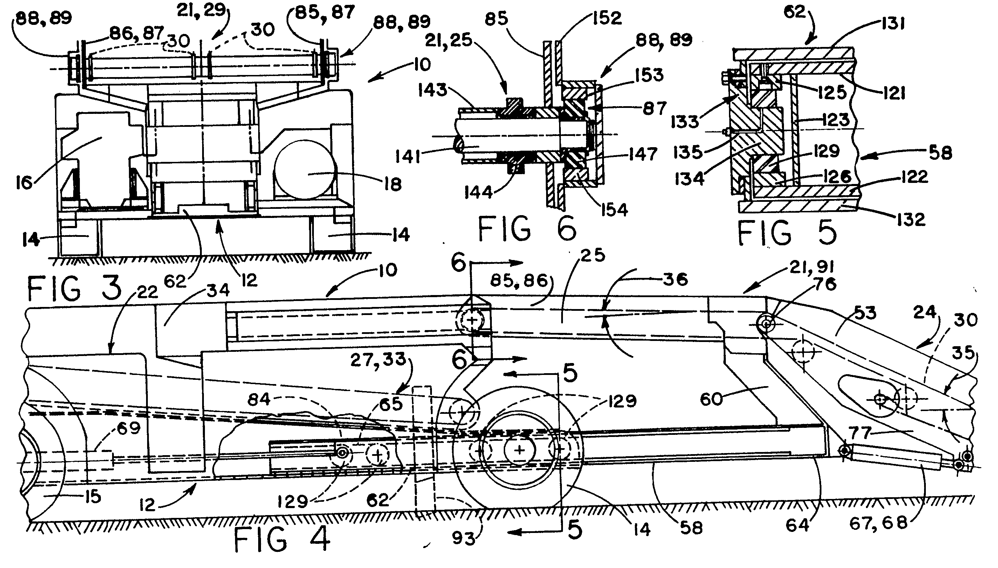

The apparatus has primary and secondary conveyor assemblies 21 and 22 respectively, the assembly 21 having forward and rear portions 24 and 25 respectively, and the assembly 22 having forward and rear portions 27 and 28. The two conveyor assemblies are disposed along the longitudinal axis 19 so that the rear portion 25 of the primary conveyor assembly is disposed above the forward portion 27 of the secondary conveyor assembly to permit material to fall from the primary to the secondary conveyor assemblies. The primary conveyor assembly has an inclined chain conveyor 29 having four chains 30 connecting a plurality of flights, some of which are shown in broken outline, the conveyor 29 being similar to those conveyors as commonly used in mucking operations. The chain conveyor 29 has a width 31 which is considerably wider than width 32 of the secondary conveyor assembly, which has a belt conveyor 33 as commonly used in mines for transporting muck. Both conveyors pass through conveyor drive means so that upper surfaces of the conveyors move rearwardly in a general direction of an arrow 37. As seen in Figure 4, the forward portion 24 is inclined at an angle 35, about 15°, and the rear portion 25 is inclined at a shallower angle 36, typically between 1° and 5°. Thus material moving up the primary conveyor is subjected to a rapid climb initially on the forward portion to reduce length of the conveyor, and is then transported essentially horizontally on the rear portion for discharge onto the forward portion 27 of the secondary conveyor assembly below, the discharged material being guided by an inclined tapering funnel 34.

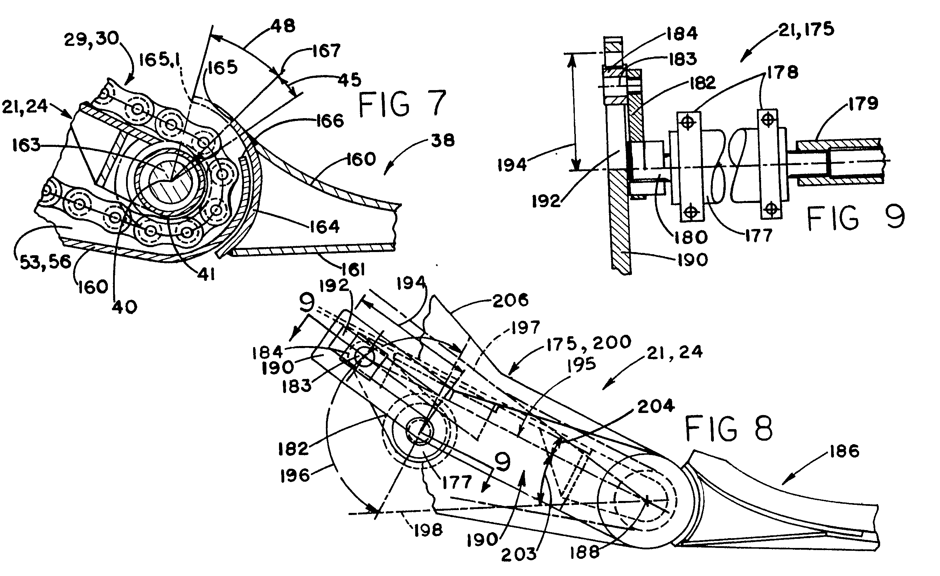

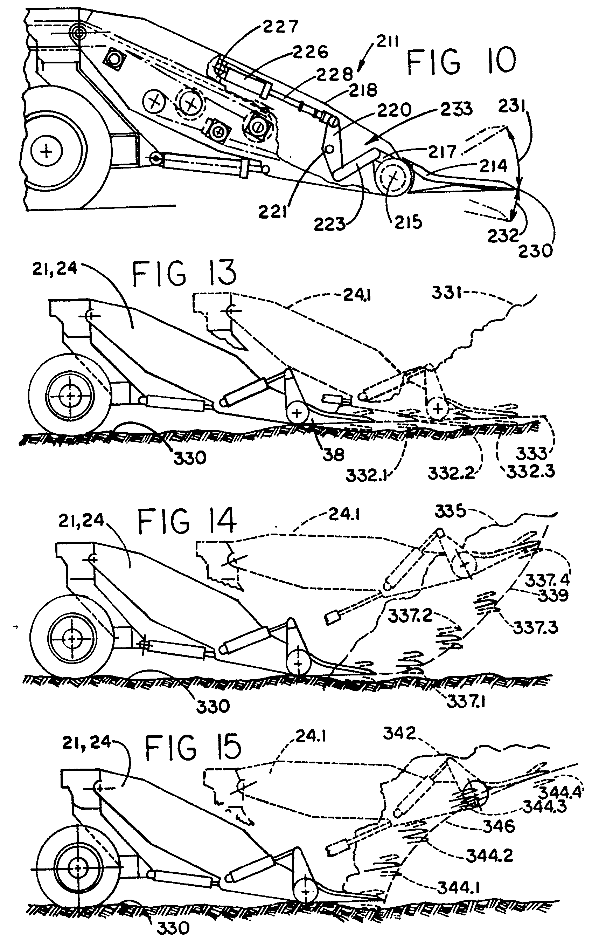

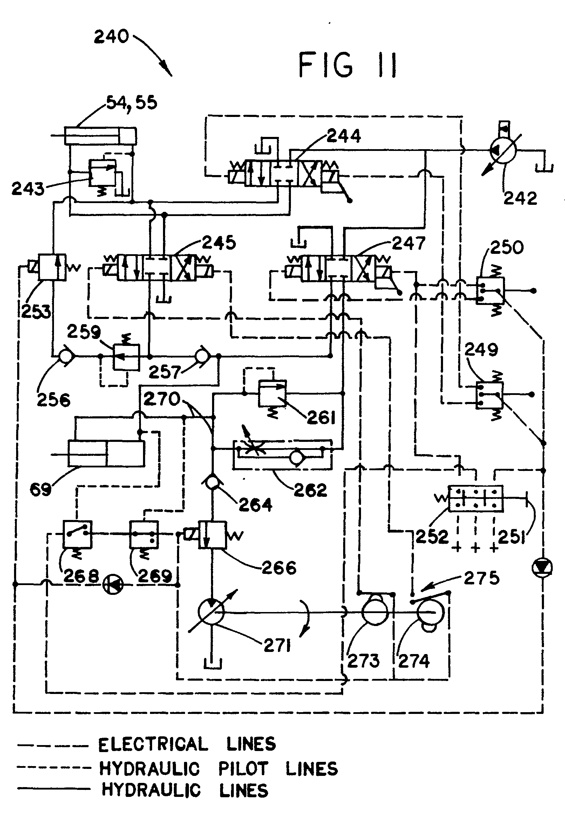

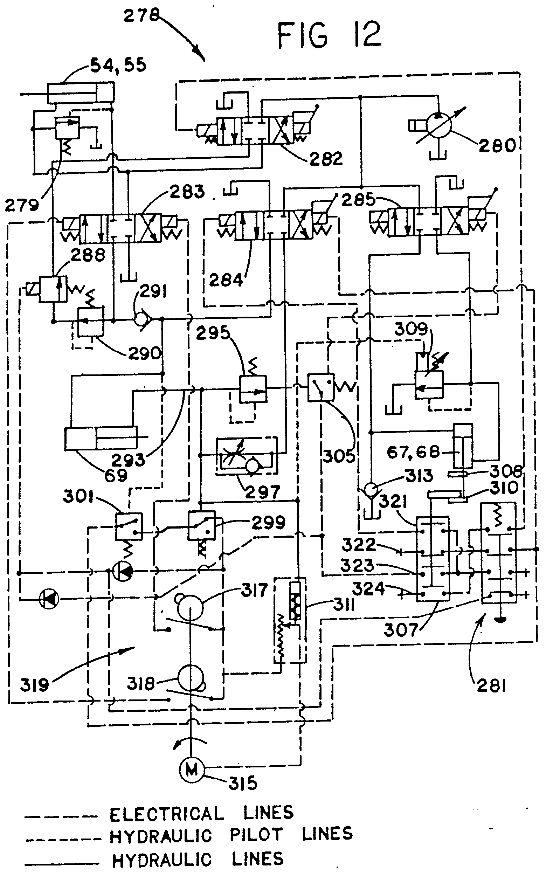

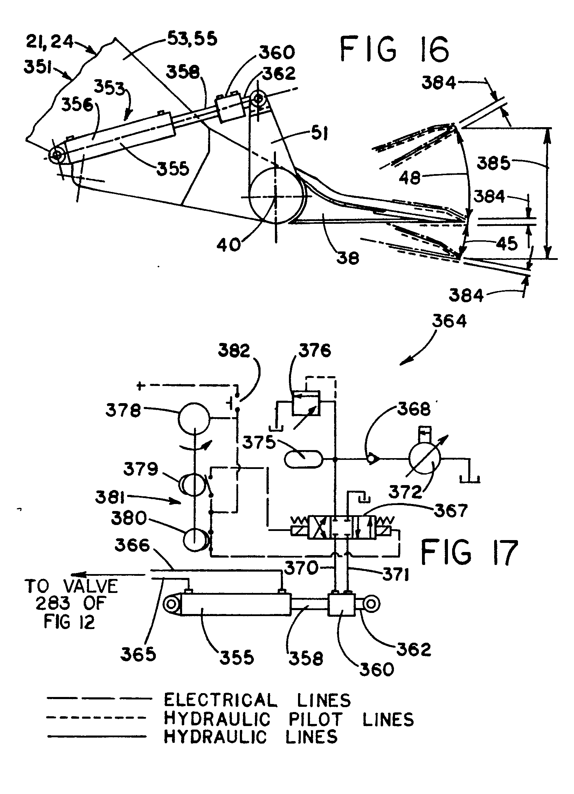

A penetrating means or penetrator 38 has a forward tip 39 and is mounted adjacent the forward portion 24 of the primary conveyor assembly for swinging about a transverse penetrator axis 40 disposed horizontally and normally to the longitudinal axis 19 in the top plan view of Figure 2. The penetrator axis is coincident with an axis of a forward conveyor sprocket shaft 41 and permits the penetrating means to swing through an arc 42 from a horizontal datum position as shown in full outline to a downwardly inclined position 44 disposed to the horizontal at an angle 45, about 10°, through to an upwardly inclined position 47 disposed to the horizontal at an angle 48, about 30°. For some applications the angle 45 could be equal to the angle 48, i.e. about 30°. A pair of penetrator moment arms 51 and 52 extend from an inner portion of the penetrating means to serve as coupling means 50 which cooperate with respective hydraulic penetrator actuating cylinders 54 and 55 respectively which have opposite ends cooperating with side members 53 and 56 of the primary conveyor assembly. Each hydraulic cylinder thus has a first portion cooperating with the primary conveyor assembly and a second portion cooperating with the coupling means. It can be seen that actuation of the penetrator cylinders 54 and 55 swings the penetrating means through the angles 45 and 48 as required. A known hydraulic apparatus, not shown, provides a flow of fluid to reciprocate the cylinders 54 and 55 so as to oscillate the penetrating means relative to the conveyor assembly to facilitate loading of material onto the primary conveyor. The hydraulic apparatus is a flow control means which includes a hydraulic pump and manually operated directional valve with which the operator can produce a reversal of flow in conduits cooperating with the hydraulic cylinders 54 and 55. In alternative flow control means to be described with reference to Figures 11 and 12, a sensor cooperates with the penetrating means or the hydraulic circuit to detect mucking conditions so that mode of oscillation of the penetrating means can be varied to suit the mucking operation. In the simple manual apparatus herein, and in the more complex apparatus of Figures 11 and 12, the hydraulic cylinder apparatus and associated structure, such as the coupling means 50, serve as oscillating means 57 which cooperate with the penetrating means to oscillate the penetrating means about the transverse axis. Means other than the moment arms 51 and 52 and cylinders 54 and 55 can be provided to oscillate the penetrating means, as will be described with reference to Figures 8 through 10 and 16.

Thus, in summary, the penetrating means is hinged on the primary conveyor assembly for rotation about the horizontal transverse penetrator axis 40 disposed normally to the longitudinal axis 19. Also the oscillating means 57 include extensible and retractable hydraulic actuator means and coupling means extending between the primary conveyor assembly and the penetrating means so that actuation of the actuator means oscillates the penetrating means about the transverse axis.

The apparatus also includes a ram member 58 extending rearwardly and axially from a primary conveyor support 60, which supports a forward end of the portion 25 and a rear end of the portion 24 of the primary conveyor assembly. The body 12 has a ram socket 62 which is complementary to the ram member and is adapted to receive the ram member therein. The socket is mounted on the body so as to be disposed generally axially, that is along the longitudinal axis 19, and horizontally as viewed in the side elevation of Figure 1. As will be described with reference to Figure 5, the ram member and ram socket are generally rectangular in cross section and provide a sturdy support for ensuring axial movement of the ram member and primary conveyor assembly as will be described. As best seen in Figures 2 and 4, the ram member has forward and rear ends 64 and 65, with spaced parallel primary conveyor elevating cylinders 67 and 68 connected at the forward end 64, and a ram actuating cylinder 69 connected at the rear end 65. The primary conveyor support 60 also extends upwardly from the forward end 64 of the ram member to an upper hinge pin 76 to which is connected to the forward portion 24 of the primary conveyor to permit swinging thereabout relative to a conveyor hinge concentric with the pin 76. Thus the support 60 supports adjacent portions of the primary conveyor assembly at the conveyor hinge. The elevating cylinders 67 and 68 extend to the side members 53 and 56 of the foward portion 24 remote from the hinge pin 76 so that extension of the elevating cylinders 67 and 68 swings the forward portion 24 about the pin 76 through an arc 78 to an uppermost position 79, shown in broken outline in Figure 1 only, in which the forward portion 24 is essentially horizontal. Thus the forward portion 24 is hinged to the rear portion 25 to permit relative swinging therebetween about the hinge, and the cylinders 67 and 68 serve as elevating means which cooperate with the forward portion 24 and the ram member to swing the portion 24 relative to the portion 25 to vary height of the transverse axis 40. When the forward portion 24 is in the uppermost position 79, and the penetrating means is fully elevated relative to the portion 24, the tip 39 of the penetrating means assumes an uppermost position 81 which is the highest portion of the apparatus. The ram actuating cylinder 69 has an inner end 83 secured adjacent a rear portion of the body 12, and an outer end 84, i.e. an end of the piston rod thereof, secured to the rear end 65 of the ram member 58 so that actuation of the ram actuating cylinder moves the ram member axially along the ram socket. Hydraulic apparatus and other telescoping means equivalent to the ram cylinder can be substituted.

As will be described with reference to Figure 6, the rear portion 25 of the primary conveyor assembly has a pair of parallel side members 85 and 86, each member having first guide means 87 extending along both sides of the conveyor. The body 12 has an upper support 88 having a second guide means 89 to engage the first guide means 87 of the primary conveyor assembly to permit essentially axial movement between the conveyor assemblies 21 and 22 and also to support the rear portion 25 of the primary conveyor assembly above the second conveyor assembly. Thus, extension of the ram member 58 produces concurrent forward movement of the forward portion 24 and the rear portion 25 of the assembly 21. Thus it can be seen that the ram socket and second guide means, which are both fixed and carried on the body 12, support the ram member 58 and rear portion 25 of a movable excavating assembly 91 which includes the complete primary conveyor assembly 21, the penetrating means 38, the primary conveyor support 60, the penetrator cylinders 54 and 55 serving as actuating means, the elevating cylinders 67 and 68 serving as elevating means, and the ram member 58 serving as extension means. This total excavating assembly is movable "en masse", i.e. all together as one connected assembly, relative to the body and this, permits the penetrating means 38 to be forced into a muck heap at a particular angle whilst the body 12 and secondary conveyor assembly remain stationary.

Thus, in summary, the excavating assembly is supported on the extension means which extends forwardly from the body and supports the primary conveyor assembly to permit essentially axial movement between the primary and secondary conveyor assemblies. The extension means includes the ram means cooperating with the primary conveyor assembly and the body to permit longitudinal axial sliding movement of the primary conveyor relative to the body so that the penetrating means is forced into the material, the ram means concurrently supporting the forward portion of the primary conveyor.

The wheels 14 and 15 or equivalents such as tracks serve as mobile mounting means to support the body for movement as described for positioning the apparatus relative to the muck heap. For mucking operations, it is preferable to provide a rigid, anchored base for the body 12 and eliminate resilience effect of the tires and suspension by raising the body to relieve weight from the wheels during the mucking operation, and to provide forward movement for the penetrating means by extending the excavating assembly 91 as described. Such raising is accomplished by providing first and second pairs 93 and 94 of extensible support legs adjacent the forward and rear portions of the body respectively. These legs are generally similar and are fitted in complementary guides in the body and are provided with internal hydraulic rams, not shown, to extend downwardly from the body to engage the ground, and if extended sufficiently will lift the wheels completely off the ground. Each extensible support leg is independently adjustable so as to vary inclination of the body relative to the surface, which would correspondingly vary a path of extension or sweep of the ram member 58, so as to accommodate terrain or other variables in the mine. In this way, when the body 12 is set by the legs in a desired attitude, the ground under the muck heap can be scraped by the penetrating means 38 in a desired plane thus producing a final road bed of desired inclination. This reduces the irregularities in the final road bed that are commonly produced by prior art machines, some of which excavate whilst being supported on tires or tracks, where suspension resilience or irregularities in the existing road bed reduce control of a scraper or equivalent. Clearly, in prior art machines where a scraper, etc. extends or overhangs considerably forwardly from wheels or tracks, any unevenness in the existing road bed is magnified at the scraper due to the overhang effect. Thus, weight is relieved, or completely eliminated from the mobile mounting means and reaction to thrust on the excavating assembly 91 is resisted by the four legs. In Figure 4, one leg of the first pair 93 is shown extended in broken outline and has a point to engage the ground to resist mucking forces.

A pair of similar laterally extensible rams 97 and 98 are mounted adjacent a rear portion of the body 12 and have axes of extension and retraction 99 and 100 which are inclined at equal acute angles 102 and 103 to the longitudinal axis, typically about 80°. The ram assemblies have extensible portions 104 and 105 having outer ends adapted to contact side walls of the mine opening where feasible at an acute angle relative to the longitudinal axis 19 as best seen in Figure 2. An acute angle of contact with the side walls is preferred because the force from mucking is in direction of the arrow 37 and it can be seen that the acute angle of the rams contacting the walls resists slipping more effectively than if the rams were at right angles to the wall. Thus, the apparatus includes a first pair of extensible rams which are mounted on the body and, where appropriate, are adapted to extend generally laterally and horizontally from the body to engage adjacent oppositely facing surfaces to augment restraint of the apparatus against movement.

A pair of similar upwardly extensible rams 108 and 109 are mounted on opposite sides of the body adjacent the rear portion thereof and, where appropriate, are adapted to extend generally upwardly to engage an upper surface above the apparatus, i.e. the roof of the mine opening which is not shown. The ram 108 is mounted on a knuckle joint 110 at a lower end thereof to permit swinging of the ram within a partially conical envelope 111 so as to vary angle of contact of the ram with the surface with which it is engaged. A swing cylinder 112 extends between the body 12 and the ram to control angle of the ram 108. When the first and second pairs of legs 93 and 94 are extended, followed by extension of the rams 108 and 109, the body 12 is securely restrained within the mine opening. Thus, extension of the rams augments restraint of the apparatus against movement by increasing load on the means bearing weight of the apparatus, in this case, the first and second pair of legs 93 and 94.

Figure 5

The ram member 58 and ram socket 62 are generally symmetrical about the axis 19, not shown, and thus one portion only will be described. The ram member 58 has a generally rectangular box section having four plate members, three only of which are shown, namely parallel upper and lower plate members 121 and 122 and a vertical plate member 123 extending between the members 121 and 122. The members 121 and 122 extend outwardly beyond the member 123 and are provided with wear strips or rails 125 and 126 respectivley which straddle a ram guide roller 129 fitted between the wear strips. The ram socket 62 has upper and lower wall members 131 and 132 which are connected by a side member 133 carrying an inwardly extending spindle 134 which journals the roller 129 thereon, the spindle having a lubrication passage 135 to lubricate the roller 129. Opposite sides of the ram member and ram socket are similar and it can be seen that the considerable loads existing between the ram member and ram socket are carried on the wear strips and respective rollers. At least four pairs of the ram guide rollers 129 are fitted in the ram socket to support and guide the ram member as it extends and are also shown in broken outline in Figures 1, 2 and 4. The rollers and rails are defined as roller means to mount the ram for axial movement relative to the ram socket.

Figure 6

The primary conveyor assembly 21 and respective supports are generally symmetrical about the axis 19, not shown, and thus one portion only will be described. The rear portion 25 of the assembly 21 has a rear support spindle 141 extending non-rotatably between the side members and journalling thereon a rear conveyor sprocket shaft 143 carrying a conveyor sprocket 144. The spindle 141 has an outer end adjacent the side members 85 journalling a conveyor guide roller 147 thereon. The support 88 of the body 12 has a grooved side wall 152 having upper and lower wear surfaces or rails 153 and 154 which straddle the guide roller 147. Thus, the guide roller is restrained against vertical movement to resist forces imparted to the primary conveyor assembly during mucking, etc., but is free to move axially as the conveyor assembly 21 extends. An opposite end of the spindle 141 is similar and thus it can be seen that the conveyor guide rollers 147 serve as the first guide means 87 for the rear portion of the primary conveyor assembly, and the grooved side walls and rails serve as the second guide means 89 of the body to engage the first guide means. The guide rollers and rails are defined as roller means associated with the first and second guide means to mount the primary conveyor assembly for movement relative to the supporting body.

Figure 7

The penetrating means 38 has upper and lower plates 160 and 161 secured together by an inner concave wall 164 and side walls, not shown, so as to form a closed box-like assembly. A lower member 160 extending between the side members 53 and 56 of the forward portion 24 terminate at an upwardly curved lip 166 which, similarly to the wall 164, is concentric with the common penetrator axis 40 and axis of the conveyor sprocket shaft 41 of the primary conveyor. One of the conveyor chains 30, connected to the flights, not shown, for transporting material up the primary conveyor, passes around a sprocket, not shown, mounted on the conveyor shaft 41 which is hollow and encloses a fixed spindle 163 which journals the shaft 41 and the penetrating means 38. An upper edge 165 of the concave wall 164 is shown in a datum position designated 167 in which the lower plate 161 is horizontal, and the angles 45 and 48 represent maximum downward and upward ranges of movement of the penetrating means relative to the datum. Clearly, when the edge 165 is in an uppermost position, shown in broken outline 165.1, there is sufficient clearance to prevent interference with the chain. Likewise, in the lowermost position of the penetrating means, not shown, the upper edge 165 is no lower than the lip 166 of the undersurface 60. This is to direct muck relatively smoothly onto the conveyor and also to reduce ingress of muck between the frame 77 and the chain 30.

The apparatus 10 moves into a position adjacent a muck heap and drives the penetrating means disposed in the datum position into the muck heap until resistance to penetration is such that the tires are close to the limit of adhesion. The apparatus is stopped and the first and second pairs of legs 93 and 94 are extended downwardly from the body so as to provide a positive restraint of the body against movement, and to position the penetrating means 38 in a desired attitude to produce a desired final road bed. If adjacent surfaces are suitable, the laterally extensible rams 97 and 98, and the upwardly extensible rams 108 and 109 are also extended to augment restraint. The ram actuating cylinder 69 is then extended so as to force the excavating assembly 91 forwardly from the position shown in Figure 1 towards the position shown in Figure 4. The penetrating means is set so as to be generally horizontal to aid penetration, but it can be inclined to accommodate the muck pile characteristics. Also the elevating cylinders 67 and 68 are fully retracted initially so that the penetrating means 38 is at its lowermost position, but the forward portion 24 can be raised by extending the cylinders 67 and 68 if the muck heap is excessively high or resistant to penetration.

When the operator feels a particular crowding force is attained, or the rate of ram cylinder extension or loading of material becomes too slow, the penetrator actuating cylinders 54 and 55 are actuated so as to produce oscillations of the penetrating means. The angular range or amplitude of swinging of the penetrating means is determined by the stroke of the actuating cylinders and this is selected by the operator to suit the characteristics of the muck heap. A typical amplitude range is 10° up to 10° down, with upper and lower extreme limits of 30° and 10°, or even 30° respectively, as previously stated. Also, frequency of vibration is also selected by the operator and a typical range of manually applied frequency would be between 10 cycles per minute through 120 cycles per minute. The operator has independent control of both amplitude and frequency of oscillation and can select a wide oscillation at low frequency, or a small oscillation at higher frequency. Other modes of oscillation of the penetrating means are envisaged and, as will be described with reference to Figures 11 and 12, can be automatic by programming into the hydraulic circuit by hydraulic components or suitable mechanical linkage. It has been found that a manually applied, relatively low frequency, e.g. 30 cycles per minute for amplitude of 10° down to 10° up, is effective for commonly encountered muck piles. For a penetrating means having a maximum longitudinal dimension of about 60 cms from the axis 40 to the tip 39, a 20° total swing produces a maximum amplitude of swing of about 20 cms. In some conditions a 10° total swing at about 60 cycles per minute is effective.

The muck material immediately adjacent the penetrating means is disturbed by the oscillations, and material above the penetrating means falls onto the penetrating means and then onto the lower portion of the forward conveyor assembly, from where it is transported upwardly and rearwardly. The oscillations permit the tip of the penetrating means to penetrate into the muck heap in an essentially continuous manner, thus producing an essentially continuous stream of material falling onto the conveyor assembly, and essentially eliminating the intermittent feeding of material onto the conveyor assembly which is inherent in prior art apparatus using scrapers, buckets, etc. As the penetrating means moves into the muck pile, if the elevating cylinders remain inactive, the penetrating means follows a desired path which is dependent on inclination of the ram socket, and is independent of surface undulations and resilience of the suspension because the supporting legs 93 and 94 carry the body whilst the ram means extends. The full stroke of the ram cylinder into the muck pile preferably produces a load sufficient to fill a conveyance, not shown, adjacent a rear portion of the secondary conveyor assembly.

In summary, the method of the invention is characterized by moving the primary conveyor assembly relative to the secondary conveyor assembly along the longitudinal axis so that the penetrating means penetrates material to be loaded without corresponding movement of the secondary conveyor assembly. The penetrating means is oscillated about a horizontal transverse axis disposed normally to the longitudinal axis to facilitate loading of material onto the conveyor.

Figures 8 and 9

The penetrator oscillating means 57 of Figures 1 through 4 is relatively simple mechanically, but the moment arms 51 and 52 and penetrator cylinders 54 and 55 are exposed to dirt and also occupy considerable space and thus are vulnerable to damage in the confined spaces of a mine. Alternatively, the penetrator oscillating means should be less exposed and smaller, and thus would be less subject to damage, and a second embodiment of the penetrator oscillating means 175 is preferred in certain circumstances. The embodiment 175 results in a relatively low profile by elimination of the penetrator cylinders and moment arms and substitution of an alternative hydraulic rotary actuator 177 and coupling means for use with a suitable hydraulic circuit.

Referring to Figure 9, the rotary actuator 177 is fitted adjacent one side of the primary conveyor assembly 21 and a rigid tubular coupling 179 connects to a second rotary actuator, not shown, fitted adjacent an opposite side of the conveyor so that both actuators are rigidly coupled and connected in such a way so as to rotate in similar directions simultaneously. The actuator 177 has a body secured by brackets 178 to supporting structure of the primary conveyor assembly 21, not shown, and has an output shaft 180 connected to a swinging arm 182 which has a connecting pin 183 journalling a shoe 184 at an outer end thereof. An alternative penetrating means 186 is generally similar to the penetrating means 38 of Figures 1 through 4 and is journalled for swinging about a penetrator axis 188 adjacent a lower end of the forward portion 24 of the assembly 21. An operating arm 190 extends rearwardly and rigidly from a rear portion of the penetrating means 186 and is also rotatable about the axis 188. The arm 190 has an elongated slot 192 adjacent an outer end thereof, the slot accepting the shoe 184 as a sliding fit therein for sliding between ends of the slot in a stroke having a length 194. The rotary actuator 177 can swing the arm 182 and the pin 183 through a maximum arc 196 of 180°, and an axis 195 of the arm connecting the axis 188 with an axis of the pin 183 oscillates within an envelope defined by broken lines 197 and 198. The operating arm, the slot, the shoe and swinging arm serve as coupling means 200 cooperating with the rotary actuator 177 and the penetrating means. The rotary actuator 177 is a hydraulic actuating means and has a first portion cooperating with the primary conveyor assembly and a second portion cooperating with the coupling means.

By geometry, in operation it can be seen that as the rotary actuator swings the arm 182 through the arc 196, the pin 183 and shoe 184 cooperate with the opeating arm 190 to swing the arm 190 through a lower angle 203 and an upper angle 204 and back again. This reciprocating of the arm 190 results in an equal but opposite oscillation of the alternative penetrating means 186 through equivalent upper and lower angles equal to the angles 203 and 204 respectively, in a manner similar to swinging of the penetrating means 38 through the angles 48 and 45 as described with reference to Figures 1 through 7. It can be seen that the arm 190, and a similar arm, not shown, at an opposite side of the penetrating means, oscillate through an angle of about 40° and thus can be easily accommodated in a low profile protective enclosure or side casing 206 which protects the hydraulic components and does not increase excessive size of the penetrating means. Thus, the oscillating means 175 is less vulnerable to damage when compared with the oscillating means 57 of Figures 1 through 7. The actuator is supplied with a hydraulic fluid flow which alternates in direction as previously described so as to oscillate the rotary actuator.

## Figure 10

A third embodiment of a penetrator oscillating means 211 has similar advantages to the second embodiment of Figures 8 and 9, but eliminates the cost and complications of the rotary actuators. One side only of the penetrating means is shown, the structure being symmetrical about the axis 19 of Figure 2. An alternative penetrating means 214 is journalled for rotation about a penetrator axis 215, the penetrating means having a relatively short moment arm 217 extending from each side of the conveyor, one only being shown, and fitted within protective side casings 218 of the forward portion of the primary conveyor assembly. A rocker arm 220 is journalled for swinging about a rocker axis 221 relative to the casing, and a connecting link 223 extends between and is hinged to a lower end of the rocker arm 220 and to an outer end of the moment arm 217. A penetrator actuating cylinder 226 has a first portion 227 mounted on the casing with a second portion, i.e. a piston rod 228, connected to an upper end of the rocker arm 220. It can be seen that reciprocation of the cylinder 226 oscillates the rocker arm about the rocker axis 221, which movement is transmitted through the connecting link 223 and moment arm 217 to the penetrator means which swings through upper and lower angles 231 and 232 from a datum 230. It can be seen that the rocker arm, connecting link, moment arm and associated structure serve as coupling means 233 and provide a low profile penetrator oscillating means producing a similar range of movement to the previously described penetrating means without the complexity of the rotary actuators of Figures 8 and 9. Similarly to the penetrator oscillating means of Figures 1 through 7, and of Figures 8 and 9, a flow control means such as a manually controlled directional valve and associated circuitry, or that shown in Figures 11 and 12, cooperates with the cylinder to produce reversal of flow in conduits so as to result in oscillation of the penetrating means. As in the previous oscillating means embodiments, the oscillating means cooperates with the penetrating means to oscillate the penetrating means about the transverse penetrator axis.

## Semi-Automatic Alternatives — Figures 11 and 12

The operation of the embodiments of the invention disclosed in Figures 1 through 10 have been described for use with the simple manual hydraulic circuit, wherein movement of the penetrating means is controlled by manually operable valves which control fluid flow to the requisite hydraulic apparatus, following conventional practice. Whilst such an arrangement might be preferred in some circumstances, for other applications a semi-automatic operation is preferable wherein the penetrating means is oscillated in an amount dependent on the characteristics of the muck pile. In general, the alternative hydraulic and electrical circuits which are to be described with reference to Figures 11 and 12, which includes the auxiliary circuit of Figure 17, incorporate sensing means which are responsive to the speed of advance of the penetrating means into the muck pile, or the force required to penetrate the muck pile, that is the sensor means are responsive to characteristics of material acting acting on the penetrating means or rate of loading. The sensing means is coupled to an oscillating means which oscillates the penetrating means about it transverse axis when required which assists considerably in penetrating a muck pile, and reduces skill demands on the operator. The semi-automatic systems allow penetration of the penetrating means into the muck pile without oscillation, so long as penetration is maintained above a pre-determined speed, or the force required to maintain penetration is below a pre-determined value. Thus, for penetration into a relatively free flowing muck heap, the oscillating feature might be mostly inactive and this reduces wear on the actuating mechanism. When penetration into the muck heap falls below the pre-determined speed, or force increases above the pre-determined value, the sensing means activates the oscillating means which commences the oscillation, which would thus assist in penetration of a less free flowing muck heap. Manual override of the oscillating means is also envisaged. In Figures 11, 12 and 17, normal hydraulic lines are shown in full, hydraulic pilot lines are shown in small broken lines, and electrical connections are shown as larger broken lines.

## Figure 11

The two penetrating cylinders 54 and 55 and the single ram actuating cylinder 69 are integrated hydraulically and electrically into a powering and sensing circuit, generally 240. The circuit includes a hydraulic pump 242 which is coupled hydraulically to two four-way, three-position directional valves 244 and 245, which valves control fluid flow relative to the pair of cylinders 54 and 55 in the manual mode and automatic mode respectively. A similar four-way, three-position directional valve 247 is also coupled to the pump and controls flow relative to the ram cylinder 69. A normally-closed, pilot-operated valve 243 controls return flow of fluid relative to the pair of cylinders 54 and 55. Manual switches 249 and 250 are electrically connected to the valves 244 and 247 respectivley to manually control the respective cylinders, and an automatic "on" switch 252 is controlled by a manually actuated button 251. The switch 252 controls a normally open solenoid valve 253 which controls flow in a circuit containing two check valves 256 and 257, and a pressure regulating valve 259. The directional valve 247 controls flow relative to a relief valve 261, which is disposed in parallel with an adjustable orifice and check valve assembly 262 which controls flow through a check valve 264 connected to a normally-closed solenoid valve 266. Electrical pressure switches 268 (normally open) and 269 (normally closed) are in series with each other and are electrically connected to the switch 252, and also to the valve 266 which controls flow to a variable speed hydraulic motor 271. The motor 271 is mechanically connected to cams 273 and 274 which serve as portions of an alternating switch means 275 to actuate electrical contacts which alternate current direction to the valve 245. The pressure switches 268 and 269 are responsive to fluid pressure in pilot lines connected to opposite ends of the ram cylinder 69, termed ram cylinder circuit 270, as will be described.

In operation, the apparatus approaches the muck heap with the ram cylinder 69 retracted until the penetrating means 38 is closely adjacent the muck heap. The button 251 of the automatic "on" switch 252 is depressed and held down to energize the directional valve 247 and the ram cylinder 69 extends to move the penetrating means further into the muck heap. The solenoid valve 253 is also de-energized and fluid pressure, which is controlled by the pressure regulating valve 259, is admitted into the cylinders 54 and 55 to force the penetrating means downwardly. At the same time, the pilot operated valve 243 is opened to vent the downstream side of the cylinders 54 and 55 to tank. The pressure switch 268 is initially de-energized and, as resistance to penetration of the penetrating means into the muck heap increases, pressure rises in the ram cylinder 69 until, at a pre-determined pressure, the switch 268 closes as the pilot pressure exceeds a predetermined value. The closing of the switch 268 energizes the pressure switch 269, which is at that time held open by pilot pressure as follows. As the ram cylinder 69 extends, the return fluid displaced by the piston from a chamber of the cylinder 69 into the return circuit 270 is pressurized by relief valve 261 and the orifice assembly 262. As long as the ram cylinder extends at a sufficiently high rate, the refliefvalve 261 is maintained open and return fluid in the circuit 270 is at a relief pressure which maintains the pilot pressure sufficiently high to hold the pressure switch 269 open.

As the rate of extension of the ram cylinder 69 decreases, fluid pressure in the return circuit 270 drops, and when this pressure decreases below a pre-determined pressure, the pilot pressure can no longer hold the pressure switch 269 open, and so the switch 269 closes, which energizes the solenoid valve 266 which controls the hydraulic motor 271. The motor 271 starts to rotate, with a corresponding rotation of the cams 273 and 274. As the cams rotate, direction of electrical current to the directional valve 245 is alternately reversed, i.e. the valve 245 is subjected to oscillating or alternating signals. The oscillating valve 245 in turn alternately reverses fluid flow to the cylinders 54 and 55, which controls raising and lowering of the penetrating means.

It can be seen that the frequency of oscillation of the penetrating means is in proportion to rate of extension or advance of the ram cylinder 69. At a higher rate of ram advance, a relatively large volume of return fluid in the circuit 270 rotates the hydraulic motor 271 at a relatively high speed, which consequently rotates the cams 273 and 274 at a similar high speed, causing a realtively high oscillation frequency of the penetrating means. As the rate of advance of the ram decreases, volume of return fluid in the circuit 270 also decreases with a consequent reduction of motor r.p.m., cam r.p.m. and frequency of oscillation of the penetrating means. Because the volume of fluid flowing into the cylinders 54 and 55 is relatively independent of the rate of advance of the ram cylinder, as the frequency of oscillating signals to the directional valve 245 decreases, a correspondingly greater volume of fluid flows into the cylinders 54 and 55 before reversal of flow occurs. Thus the cylinders 54 and 55 will extend to a greater extent as the frequency of actuation of the valve 245 decreases, whichᵉ results in a greater amplitude of swing of the penetrating means. Thus, as frequency of oscillation of the means 38 decreases, amplitude of oscillation increases. This is a desirable relationship because, as the resistance to penetration increases, the corresponding decrease in oscillation frequency and increase in amplitude reduces considerably the force required for penetration into the muck heap. For most materials encountered, as the muck heap resists penetration, mostly due to firmly embodied rocks or larger rocks, oscillating the penetrating means through a greater angle causes greater disturbance with corresponding less ram force required for penetration. Typical automatic frequencies of oscillation range from about 10 cycles per minute to about 200 cycles per minute, depending on the amplitude which can vary from an approximate 5° range up and down from the datum at the higher frequencies, to the wider range of 10° down and 30° up for the lower frequencies. In some conditions, the extreme range of 30° down to 30° up is preferable, and this would occur at a low frequency. The relationship between extension of the ram and oscillation frequency of the penetrating means can be varied by changing the volume displacement in the hydraulic motor 271 and by adjusting restriction of the orifice 262.

Figure 12

A further development of the hydraulic control system of Figure 11 is shown in Figure 12 and provides automatic raising of the conveyor elevating cylinders 67 and 68 in response to hydraulic fluid pressure in the ram circuit. In this second alternative embodiment, the forward portion 24 of the primary conveyor assembly is raised incrementally to an elevation which allows easier penetration of the penetrating means into the muck pile. The Figure 12 circuit also provides automatic reversal of the ram stroke while encountering a pre-determined resistance to penetration, or an equivalent slow rate of advance or extension of the ram.

A second alternative hydraulic circuit 278 is powered by a hydraulic pump 280 which supplies fluid to four four-way, three-position directional valves designated 282 through 285, which are incorporated in a circuit containing the penetrating means cylinders 54 and 55, the ram cylinder 69 and the conveyor elevating cylinders 67 and 68. A normally-closed, pilot-operated valve 279 controls return flow of fluid relative to the cylinders 54 and 55. An automatic "on" button, spring-return, multiple pole switch 281 controls electrical supply to the valve 282 and other electrically actuated components as will be described. The valves 282 and 283 provide control of fluid flow relative to the actuating cylinders 54 and 55 in manual and automatic modes respectively. The valve 284 controls fluid flow relative to the ram actuating cylinder 69, and the valve 285 controls fluid flow relative to the elevating cylinders 67 and 68. A normally open solenoid valve 288 controls fluid flow from the valve 284, which flow is pressure regulated and controlled by a pressure reducing valve 290 and a check valve 291. Pressure in conduits connecting the rear of the ram cylinder 69, termed ram cylinder circuit 293, is controlled by a relief valve 295, which is in parallel to a variable orifice and check valve assembly 297. Lines connect the circuit 293 of one end of the ram cylinder with a normally closed pressure switch 299, which switch is electrically connected to a normally open pressure switch 301, which is responsive to pilot pressure at an opposite end of the cylinder.

A normally-open pressure switch 305 is electrically connected to the valve 285 and a multiple contact limit switch 307 which is mechanically actuated by actuators 308 and 310 on the rams of the cylinders 67 and 68. A pressure relief valve 309 has a pressure relief setting which is controllable by pilot pressure in a pilot line extending from a hydraulically actuated rheostat 311 which is shown in a low resistance position. A check valve 313 closes a line from the valve 285. The rheostat 311 is electrically connected to a variable speed electrical motor 315 to control speed of the motor, which is mechanically connected to cams 317 and 318 which serve as alternating switch means 319 and are connected electrically to the valve 283 controlling the penetrator cylinders 54 and 55. The limit switch 307 has four pairs of contacts designated 321, 322, 323 and 324 which are connected electrically to components as will be described.

In operation, the system 278 functions similarly to the system 240 of Figure 11 which the exception that automatic reversal of the ram stroke and automatic raising of the forward portion of the primary conveyor assembly are provided as will be apparent from the following description. Initially the automatic "on" button 281 is depressed and held so as to energize the ram operating valve 284 which moves into the ram forward advance position to cause the penetrating means to advance forwardly into the muck heap. Simultaneously, fluid is directed through the check valve 291 to pressure reducing valve 290 which is set at a pre-determined pressure. Reduced fluid pressure from the valve 290 flows through the solenoid valve 288 into rear chambers of the cylinders 54 and 55, which extend and force the penetrating means downwardly with a pre-determined force. Fluid exhausted from the front of the cylinders 54 and 55 by the extension flows through the valve 279 to sump. As the penetrating means penetrates further into the muck pile, resistance to penetration increases which consequently causes fluid pressure to increase, causing the normally open switch 301 to close. As long as the ram cylinder 69 extends, fluid that is exhausted by the piston from the chamber of the cylinder 69 is maintained at a pressure by relief valve 295 and variable orifice assembly 297. Thus, pressure in the circuit 293, which is termed ram advance control pressure, is sufficiently high to maintain the switch 299 open, but as the rate of extension of the ram decreases, the ram advance control pressure similarly decreases and the switch 299 finally closes at a pre-determined pressure, which reflects a particular rate of ram extension, i.e. speed of ram extending from the cylinder. When the pressure switch 299 closes, the valve 288 also closes, and the cams 317 and 318 and the fluid pressure controlled rheostat 311 are energized. At this particular rate of extension of the ram cylinder, the relatively high fluid pressure in the circuit 293 orients the rheostat into the low resistance position against the spring force as shown. The electric motor 315 is thus driven at maximum speed, simultaneously rotating the cams of the switch means 319 at maximum speed which alternately energize the control valve 283 between alternate positions at maximum frequency. The valve 283 controls flow direction to the cylinders 54 and 55 which also reciprocate at maximum frequency. Because flow to the cylinders 54 and 55 is reversed more frequently, the cylinders 54 and 55 reciprocate through minimum amplitude, thus causing the penetrating means to similarly oscillate at maximum frequency and minimum amplitude.

As the rate of extension of the ram cylinder further decreases, spring force of the rheostat 311 overcomes the decreasing control pressure in the circuit 293 which causes the rheostat to increase resistance, which results in a corresponding reduction in r.p.m. of the motor 315. Thus, r.p.m. of the cams 317 and 318 also decreases, which consequently decreases the oscillating frequency of the penetrating means, but because the fluid flow to the cylinders 54 and 55 is essentially constant, the amplitude of oscillation of the penetrating means correspondingly increases. This mode of operation continues till the lowest pre-determined frequency and maximum amplitude of oscillation of the penetrating means is attained. At this point, the decreasing control pressure in the circuit 293 is reflected as a minimum pressure on the valve 309 which determines force on rear faces of the portions of the elevating cylinders 67 and 68. Thus, when the penetrating means 38 is forced downwardly a reaction force on the cylinders overcomes the force due to the decreasing pressure on the rear faces of the pistons in the conveyor elevating cylinders 67 and 68. That is, there is now an inbalance in forces on opposite sides of the pistons of the cylinders 67 and 68, which causes the rams of the cylinders 67 and 68 to extend and to raise the forward portion of the conveyor. The forward portion of the conveyor will continue to rise until there is less resistance to penetration of the penetrating means, which results in a corresponding increase in rate of extension of the cylinder 69. As the ram extension speed increases, pressure in the circuit 293 increases which results in a corresponding feedback signal to decrease resistance of the rheostat 311 with a corresponding increase in oscillation frequency. Thus, the hydraulic circuit "searches" for an optimum loading rate commensurate with loading conditions as the forward portion of the conveyor is raised to a pre-determined height, depending on height and type of muck pile. Two relatively extreme types of loading conditions produce two different modes of operations as will be described with reference to Figures 14 and 15. In this embodiment, it can be seen that a portion of the circuit also serves as a sensor means to control the elevating of the conveyor assembly which is actuated when a particular operating condition is attained. In effect, the sensor senses a decrease in rate of loading or ram advance such that the ram advance drops below a pre-determined minimum rate, and then automatically allows the forward portion 24 to rise so that the penetrating means is advanced into the material at a higher elevation.

When the forward portion of the conveyor reaches an upper limit of elevation, the actuator 310, cooperating with the cylinders 67 and 68, now actuates the limit switch 307 which produces a change in the operation as follows. At first the contacts 322 are opened and the valve 284 controlling the ram cylinder is closed. This stops extension of the ram and pressure switch 301 now opens and stops oscillation of the penetrating means and the valve 288 is energized. Next the contact 321 closes which energizes the valves 284, which reverses flow to the ram cylinder, causing the ram cylinder to retract. The contact 324 now closes, which energizes the valve 282 which raises the tip of the penetrating means to a maximum raised position. Next the contact 323 closes which energizes the switch 305 and the ram cylinder 69 now retracts until it reaches the end of its stroke, with a consequent increase in pressure in the circuit 293 closing the switch 305. This energizes the valve 285, which lowers the forward portion 24 of the conveyor to the original lowered position, and at this point, the actuator 308 cooperating with the cylinders 67 and 68 deactivates the limit switch 307, thus re-opening all the contacts 321, 323 and 324, and closing the contact 322. At this point, the system returns to the penetrating means advance mode, i.e. extension of the ram cylinder 69 as previously described, and the cycle above is repeated until the ram cylinder 69 reaches the end of its forward travel, that is at the end of its stroke. At this stage, the ram would normally be retracted manually, and the whole apparatus would be advanced further towards the muck heap to recommence the operation.

The cams 317 and 318 can be moved in relation to each other to change the phase therebetween, so as to change the duration of up and down strokes as applied to the penetrating means, thus causing the penetrating means to either climb out of the muck pile or dig down into the muck pile.

Alternatively, other means of controlling the oscillating frequency in relation to ram cylinder advance can be used. For example, the variable orifice valve 297, the rheostat 311 and motor 315 can be replaced by a variable spaced hydraulic motor driven by the return fluid from the ram cylinder 69 in a manner similar to that of the previously described embodiment. The speed of the cams mounted directly on the hydraulic motor shaft would be in direct proportion to ram cylinder advance speed, and proportionally between the oscillation frequency and ram advance can be changed by changing the displacement of the motor. Automatic sequencing and sensing can be attained as above using electronic means or by fluid logic or by other hydraulic means.

A further alternative control system can be substituted if desirable for muck which is more difficult to load, and this embodies a further alternative sensing means similar to that previously described, but one that not only controls oscillation of the penetrating means, but also controls cyclical extension of the ram cylinder 69. The ram 69 can similarly be oscillated in a phase difference relative to oscillation of the penetrating means so that the tip 39 of the penetrating means follows a circular orbit or locus, or any closed locus. The locus of the tip 39 can be varied to provide the best loading action for the characteristics of the material to be loaded by adjusting the direction and rate of flow of the hydraulic fluid into the appropriate hydraulic cylinders. It can be seen from the above description of the two circuits that the circuit of Figure 12 could be more easily adapted for this latter arrangement, but this adaptation is not described in detail.

Thus, when considering the circuits of Figures 11 and 12, the ram cylinder is thus a hydraulic apparatus which has the associated ram hydraulic circuit receiving and discharging fluid having hydraulic parameters related to fluid pressure and fluid flow rate. Also the pressure responsive switches 268 and 269 of Figure 11, and 299 and 301 of Figure 12 and associated circuitry serve as sensor means responsive to at least one of the hydraulic parameters of the ram hydraulic circuit and has an output, i.e. the circuit controlling the motor 271 of Figure 11, or the motor 315 of Figure 12, connected to means controlling fluid flow to the oscillator means. It can be seen that the sensor means of either circuit includes a pressure responsive electrical switch communicating with one chamber of the ram cylinder, in each case herein disclosed with the conduit receiving fluid discharged from the chambers by the piston, but this is not essential to use that particular conduit. The fluid parameters reflect rate of extension of the ram, which is also a reflection of rate of loading of material on the conveyor. A more direct means of measuring rate of loading would be monitoring input of power for driving the conveyor itself. Also with suitable changes the ram actuating cylinder could be retracted during forward movement of the primary conveyor, and thus the sensor means could be responsive to ram retraction. The oscillator means includes alternating electrical switch means and motor means to drive the switch means, the motor means being responsive to the pressure responsive electrical switch. The oscillator means also includes an electrically actuated directional valve connected to the reversing electrical switch means and controlling flow relative to hydraulic actuator means cooperating with the penetrating means. In both circuits, the switch means are a pair of rotary cam actuated alternating switches phased relative to each other so that the directional valve controlled by the switch means alternates flow to the hydraulic actuator means of the penetrating means at a frequency responsive to the rotation of the cams. Also, the motor has a rotary output coupled to the alternating switches and is rotated in an amount proportional to flow of fluid in the ram circuit. In summary, the sensor means cooperates with the oscillator means to vary frequency of oscillation of the penetrating means.

In summary, the semi-automatic method associated with the circuits of Figures 11 and 12 is characterized by sensing characteristics of the material to be loaded by monitoring a rate of loading, and varying automatically amplitude and frequency of oscillation of the penetrating means. This is attained by sensing a decrease in rate of loading of material, or alternatively a decrease in rate of advance of the penetrating means into the material due to resistance to penetration, and automatically decreasing the frequency and increasing the amplitude of oscillation of the penetrating means. Thus the characteristics of the material and rate of loading of material are sensed by automatically monitoring rate of advance of the penetrating means into the material.

Figures 13 through 15

The descriptions following relate to modes of operation of the loading apparatus using the semi-automatic circuit of Figure 12, which subjects the penetrating means to an operating elevation and an oscillation dependent on loading conditions.

Referring to Figure 13, the forward portion 24 of the primary conveyor assembly 21 is shown in full outline in an initial starting position with the penetrating means 38 shown positioned above an existing road bed 330 and about to penetrate a muck pile 331 having very easy loading characteristics with a shallow angle of repose, shown in broken outline. As the ram means, not shown, extends the portion 24 to a maximum forward position, shown in broken outline at 24.1, when a pre-determined resistance is felt, the penetrating means is oscillated at a normal frequency and amplitude. Three sequentially advancing positions of a forward portion of the penetrating means are shown in broken outline positions 332.1 through 332.3, the broken outline positions defining a locus 333 which is generally parallel to the road bed 330. This represents easy mucking conditions wherein the oscillating means is actuated minimally as needed and this disturbs the muck pile sufficiently to enable the muck to fall easily onto the forward portion of the conveyor 24 without raising the forward portion.

Referring to Figure 14, a muck pile 335 having relatively easy loading characteristics is shown having a steeper angle of repose and the penetrating means 38 is shown in four sequentially advancing positions designated 337.1 through 337.4, so as to define a locus 339, shown in broken outline. It can be seen that the locus 339 is rearwardly concave and this represents a typical path of the penetrating means through a muck pile of relatively easy loading characteristics. Thus, in such a muck pile, the method using the semi-automatic system as described with reference to Figure 12, is characterized by raising the forward portion of the primary conveyor assembly and simultaneously advancing the penetrating means so that the penetrating means describes a locus of a rearwardly concave shape.

Referring to Figure 15, the apparatus is shown penetrating a muck pile 342 of relativley difficult loading characteristics and having a very steep angle of repose. The penetrating means is shown in four sequential positions 344.1 through 344.4 so as to define a locus 346 of rearwardly convex shape. Thus, when loading a muck pile of relatively difficult loading characteristics, the forward portion of the primary conveyor is raised and the penetrating means is advanced simultaneously so that the penetrating means describes a locus of rearwardly convex shape.

It can be seen above that oscillating the penetrating means in combination with ram advance and simultaneously raising of the forward portion of the conveyor, when required, describes a locus dependent on characteristics of the muck pile, which reflects rate of loading, and programming of the hydraulic parameters of the circuit. Clearly, a wide range of operating functions can be accommodated by selecting circuit parameters such that the locus of the penetrating means can be disposed between an essentially straight horizontal line as shown in Figure 13, to a rearwardly convex or concave shape as shown in Figures 14 and 15.

Figures 16 and 17

A fourth embodiment 351 of an oscillating means is for use in muck piles of particularly difficult loading characteristics and differs from the previously described oscillating means by providing apparatus and method which superimposes one type of oscillation upon another type of oscillation of the penetrating means so as to provide a compound oscillation of two distinct oscillations, i.e. a last two modes of oscillation. Referring to Figure 16, the penetrating means 38 is shown hinged for oscillation about the penetrator axis 40 adjacent the forward portion 24 of the primary conveyor assembly 21. The penetrator moment arm 51 extends from the axis 40, but the penetrator cylinder 54 of Figure 1 is eliminated and a separate compound oscillation apparatus 353 is substituted. The apparatus 353 includes a large stroke hydraulic cylinder 355 having a first portion or body 356 hinged to the forward portion 24, and a second portion or piston rod 358 extending therefrom. The rod 358 carries a small stroke cylinder 360 aligned therewith and having a respective short piston rod 362 connected to an outer end of the moment arm 51. It can be seen that the compound oscillating apparatus 353 includes large and small stroke hydraulic actuators or cylinders arranged in series with each other and extending between the primary conveyor assembly and the arm 51 to provide coupling means equivalent to those as previously defined and described.

Referring to Figure 17, an auxiliary circuit 364 is coupled to the circuit 278 of Figure 12, and is used to actuate the small stroke cylinder 360 of Figure 16. The large and small stroke cylinders 355 and 360 are controlled by separate directional flow valves, the large cylinder 355 being controlled by the directional flow valve 283 of Figure 12 which controls fluid flow relative to the cylinder 355 through conduits 365 and 366 which are coupled to undesignated conduits in Figure 12 which cooperate with opposite ends of the cylinders 54 and 55. A four-way, three-position directional valve 367 cooperates with conduits 370 and 371 to control flow relative to the small stroke cylinder 360. A variable displacement pump 372 feeds hydraulic fluid to the circuit through a check valve 368, and an accumulator 375 and variable relief valve 376 controls fluid flow characteristics. An electrical motor 378 is coupled directly to two cams 379 and 380 of an alternating switch means 381 which controls actuation of the valve 367 so as to reciprocate the valve 367 to reverse fluid flow relative to the cylinder 360. An "on" switch 382 can be closed automatically or manually so as to supply electrical power to the auxiliary circuit 364 so as to actuate the small stroke cylinder 360 as required. When the switch 382 is open, the circuit 364 is inactive, and the valve 367 locks the conduits 370 and 371 so that the large stroke cylinder 355 functions equivalently to the penetrator actuating cylinders 54 and 55 of Figure 1.

In operation, in normal loading conditions, the circuit 364 is inactive and the penetrating means penetrates the muck pile, not shown, to swing, if necessary, through an arc of maximum amplitude shown as the arc 42, of Figure 1, representing the range of movement of two arcs 45 and 48, from a mean position as shown. When the loading rate decreases to a pre-set minimum, as determined by speed of advance of the penetrating means into the muck pile, the auxiliary circuit 364 can be actuated manually or by suitable sensing means, not shown, to close the switch 382 so that the directional valve 367 alternately supplies fluid to opposite ends of the small stroke cylinder 360. This causes the small stroke cylinder to produce a small amplitude, relatively high frequency oscillation of the penetrating means, and undesignated upper and lower positions of the penetrating means are shown in broken outline for each of the three main positions of the penetrating means. A maximum linear amplitude of oscillation due to the cylinder 360 is shown in Figure 16 for each position and designated 384. The frequency and amplitude of oscillation due to the small stroke cylinder is dependent on speed of rotation of the cams 379 and 380, fluid delivery rate of the pump 372 and relative displacement of the cylinder 360. In general, the frequency of oscillation of the small stroke cylinder would be relatively high when compared with the large stroke cylinder 355, and clearly, due its shorter stroke, will be of smaller amplitude when compared with the maximum amplitude of the large stroke cylinder. For the small cylinder 360, a frequency range of between about 100 cycles per minute and 200 cycles per minute, and amplitude of about 5 cms maximum total swing at the tip 39 is considered suitable for many mucking conditions.

It is envisaged that, for many mucking conditions, only the small stroke cylinder 360 will be oscillated as this requires less power and, being capable of a higher frequency, may be more effective in disturbing much piles of relatively small rocks. However, for the much piles of large and heavy rocks, it is expected that the amplitude range and frequency of the large stroke cylinder 355 will be more effective than the cylinder 360 for disturbing the muck pile. For convenience, the oscillation of the penetrating means that occurs when the auxiliary circuit is also operated can be considered as a compound oscillation having primary and secondary oscillations compounded to produce a compound oscillation. Each oscillation is independently variable so as to have a frequency and an amplitude which can vary from zero to a desired value. The primary oscillation from the cylinder 360 or first hydraulic means would have a relatively high frequency and low amplitude, and, at the higher frequencies, the cylinder 360 may not complete its full stroke and thus amplitude of the primary oscillation could vary from zero to a relatively low maximum. The secondary oscillation from the cylinder 355 or second hydraulic means would have a frequency which varies from zero to a relatively low maximum, e.g. 80 cycles per minute, and an amplitude which varies from zero to a relatively high maximum, e.g. 40 cms. Typical primary oscillations might be 200 cycles per minute for a 5 cm total amplitude, and a typical secondary oscillation might be 80 cycles per minute with a 30° or 20 cm total amplitude, or 40 cycles per minute with a 40° or 40 cm total amplitude. The oscillation means thus includes a compound oscillation apparatus adapted to apply oscillations as above described, and includes a small and large stroke actuator cooperating with the penetrating means so that the small stroke actuator applies the primary oscillation and the large stroke actuator applies the secondary oscillation.

Clearly, alternative hydraulic and electrical circuits can be devised in which a large stroke cylinder can be subjected to two compound fluid flows to produce a compound frequency on one cylinder, thus eliminating the short stroke cylinder in series with the large stroke cylinder. Whilst this would produce a more complex hydraulic circuit, there would be some structural simplification and clearly, the short cylinder would be eliminated. Also, such an arrangement could be utilized with the alternative hydraulic oscillating means of Figures 8, 9 and 10 utilizing the rotary oscillator and rocking arm arrangements respectively.

**Claims**

1. A continuous loading and transporting apparatus (10), comprising a body (12) mounted on wheels, tracks or the like

and a conveyor assembly (21) mounted on the body (12), the front portion of the apparatus having a single shallow penetrating means (38) disposed normally to the centre line (19) of the apparatus (10),

the conveyor assembly (21) including a front portion (24) which is pivotably adjustable about a horizontal axis (76) by the action of independent means (67, 68);

characterised in that

the front portion (24) of the conveyor assembly (21) is pivotable up to substantially the horizontal position,

the penetrating means is pivotable, independently of the front part of the conveyor (24), about a horizontal transverse axis (40) disposed normally to the centre line (19) and common to both the front portion of the conveyor assembly (21) and the penetrating means (38), and

independent pivoting means (54, 55) is provided for oscillating the penetrating means (38) about said horizontal transverse axis (40) through a predetermined arc.

2. An apparatus according to claim 1 which includes sensing means (240, 278) responsive to characteristics of material acting on the penetrating means (38) and cooperating with the oscillating means (54, 55) to vary the mode of oscillation of the penetrating means (38).

3. An apparatus according to claim 1 or claim 2 wherein the independent means (67, 68) is controlled by the sensing means (278, 293) so as to be actuated when a predetermined operating condition is attained.

4. An apparatus according to any preceding claim which includes primary (21) and secondary (22) conveyor assemblies having respective forward (24; 27) and rear (25; 28) conveyor portions and being disposed along the centre line (19) so that the rear portion (25) of the primary conveyor assembly (21) is above the forward portion (27) of the secondary conveyor assembly (22), the primary conveyor assembly being supported by extension means (58) extending from the body (12) to permit essentially axial movement between the primary and secondary conveyor assemblies (21, 22).

5. An apparatus according to claim 4 in which said extension means includes ram means (58) cooperating with the primary conveyor assembly (21) and the body (12) to effect longitudinal axial movement of the primary conveyor relative to the body so as to advance the penetrating means (38).

6. An apparatus according to claim 4 or claim 5, in which the rear portion (25) of the primary conveyor assembly (21) has first guide means (87) and the body (12) has second guide means (89) to engage said first guide means to permit essentially axial movement between the primary and secondary conveyor assemblies (21, 22) and to support the rear portion of the primary conveyor assembly (21).

7. An apparatus according to claim 5 or claim 6 in which the ram means (58) is moved by hydraulic apparatus (69) which has an associated ram hydraulic circuit (270, 293) receiving and discharging fluid having hydraulic parameters related to fluid pressure and fluid flow rate, and in which the sensing means (240, 278) is responsive to at least one of the hydraulic parameters of the ram hydraulic circuit and has an output connected to means (245, 283) controlling fluid flow to the oscillating means (54, 55).

8. An apparatus according to any one of claims 2 to 7 which includes means extensible downwardly (93, 94), sideways (97, 98) or upwardly (108, 109) to respectively engage with one or more of the ground surface, laterally facing surfaces or an upper surface above the apparatus to augment restraint of the apparatus against movement.

9. A continuous method of loading and transporting material on a continuous loading apparatus, using the apparatus according to claim 1, and consisting of the following steps:

(a) operating the conveyor assembly (21) for transporting the material to be loaded from the front portion (24) of the conveyor assembly (21) to a rear portion thereof, and

(b) advancing the penetrating means (38) into the material to be loaded by advancing the front portion of the apparatus, and

(c) continuously oscillating the penetrating means (38) by the independent pivoting means (54, 55), thereby fluidising the material and causing it to continuously flow on to the conveyor assembly (21),

(d) while raising the conveyor front portion (24) as required to pass the penetrating means (38) in a continuous path through the material to be loaded, and

(e) after each pass of the penetrating means through the material to be loaded, retreating the front portion of the apparatus, and

(f) repeating steps (a) through (e) until loading is completed.

**Patentansprüche**

1. Ein Gerät (10) zum fortlaufenden Aufnehmen und Fördern mit einem auf Rädern, Gleisketten od.dgl. aufgebauten Körper (12) und einer auf dem Körper (12) befestigten Fördereinrichtung (21), wobei der vordere Teil des Gerätes einen einzigen, quer zur Mittellinie (19) des Gerätes (10) angeordneten flachen Eindringer (38) aufweist, und wobei die Fördereinrichtung (21) einen durch eine unabhängige Vorrichtung (67, 68) um eine waagrechte Achse (76) schwenkbar einregelbaren vorderen Teil (24) aufweist; dadurch gekennzeichnet, daß der vordere Teil (24) der Fördereinrichtung (21) bis in eine im wesentlichen waagrechte Lage nach oben geschwenkt werden kann, der Eindringer unabhängig vom vorderen Teil des Förderers (24) um eine waagrechte Querachse (40) schwenkbar ist, welche senkrecht zur Mittellinie (19) verläuft und welche sowohl dem vorderen Teil der Fördereinrichtung (21) als auch dem Eindringer (38) gemeinsam ist, und für das Verschwenken des Eindringers (38) um die genannte waagrechte Querachse (40) um einen vorbestimmten Bogen unabhängige Schwenkantriebe (54, 55) vorgesehen sind.

2. Ein Gerät nach Anspruch 1, mit Fühleinrichtungen (240, 278), welche auf die Kennwerte des auf den Eindringer (38) einwirkenden Materials ansprechen und welche mit den Schwingantrieben (54, 55) so zusammenarbeiten, daß die Schwingungsart des Eindringers (38) verändert wird.

3. Ein Gerät nach Anspruch 1 oder 2, bei welchem die unabhängige Vorrichtung (67, 68) durch die Fühleinrichtung (278, 293) so gesteuert wird, daß sie beim Erreichen einer bestimmten Betriebsbedingung in Betrieb gesetzt wird.

4. Ein Gerät nach einem der vorhergehenden Ansprüche mit einer Primärfördereinrichtung (21) und einer Sekundär-Fördereinrichtung (22), welche je einen vorderen (24; 27) und einen hinteren (25; 28) Fördererteil aufweisen und längs der Mittellinie (19) so angeordnet sind, daß der hintere Teil (25) der Primär-Fördereinrichtung (21) oberhalb des vorderen Teiles (27) der Sekundär-Fördereinrichtung liegt, wobei die Primär-Fördereinrichtung von einer ausfahrbaren Vorrichtung (58) getragen wird, welche sich vom Körper (12) weg erstreckt, so daß eine im wesentlichen axiale Bewegung zwischen der Primär- und der Sekundär-Fördereinrichtung (21, 22) möglich ist.

5. Ein Gerät nach Anspruch 4, in welchem die genannte ausfahrbare Vorrichtung einen Stößel (58) aufweist, welcher mit der Primär-Fördereinrichtung (21) und dem Körper (12) so zusammenwirkt, daß eine axiale Bewegung des Primärförderers in Längsrichtung gegenüber dem Körper bewirkt wird, wodurch der Eindringer (38) vorgeschoben wird.

6. Ein Gerät nach Anspruch 4 oder 5, in welchem der hintere Teil (25) der Primär-Fördereinrichtung (21) erste Führungselemente (87) und der Körper (12) zweite Führungselemente (89) aufweist, welche an den genannten ersten Führungselementen so angreifen, daß zwischen der Primär- und der Sekundär-Fördereinrichtung (21, 22) eine im wesentlichen axiale Bewegung möglich ist und der hintere Teil der Primär-Fördereinrichtung (21) abgestützt wird.

7. Ein Gerät nach Anspruch 5 oder 6, in welchem der Stößel (58) durch eine hydraulische Vorrichtung (69) mit einem zugehörigen hydraulischen Kreislauf (270, 293) bewegt wird, dessen zu- und abströmende Flüssigkeit dem Druck und der Strömungsmenge zugeordnete hydraulische Kennwerte aufweist, wobei die Fühleinrichtung (240, 278) auf wenigstens einen hydraulischen Kennwert des hydraulischen Kreislaufes für den Stößel anspricht und einen Ausgang hat, welcher an eine Einrichtung (245, 283) zur Steuerung des Zuflusses zum Schwingantrieb (54, 55) angeschlossen ist.

8. Ein Gerät nach einem der Ansprüche 2 bis 7, mit nach unten (93, 94) seitlich (97, 98) oder nach oben (108, 109) ausfahrbaren Elementen, welche sich jeweils an einer oder mehreren Bodenflächen bzw. Seitenflächen bzw. Deckenflächen oberhalb des Gerätes zur Erhöhung dessen Widerstandes gegen eine Verschiebung abstützen.

9. Ein Verfahren zum fortlaufenden Aufnehmen und Fördern von Material mit einem entsprechenden Ladegerät unter Verwendung des Gerätes nach Anspruch 1, wobei das Verfahren aus folgenden Schritten besteht:

a) Einschalten der Fördereinrichtung (21) zum Fördern des aufzunehmenden Materials vom vorderen Teil (24) der Fördereinrichtung (21) zu deren hinterem Teil, und

b) Vorschieben des Eindringers (38) in das aufzunehmende Material durch Vorschieben des vorderen Teiles des Gerätes, und

c) andauerndes Schwingen des Eindringers (38) durch die unabhängigen Schwenkantriebe (54, 55), wodurch das Material fluidisiert und dessen andauerndes Fließen auf die Fördereinrichtung (21) bewirkt wird,

d) Vorbewegen des Eindringers in einem Zug durch das aufzunehmende Material, während der vordere Teil des Förderers je nach Erfordernis angehoben wird, und

e) Rückziehen des vorderen Teiles der Vorrichtung nach jedem Durchgang des Eindringers durch das aufzunehmende Material, und

f) Wiederholen der Schritte a) bis e) bis zur Beendigung des Ladevorganges.

**Revendications**

1. Appareil (10) de chargement et de transport en continu, comportant un châssis (12) monté sur roues, chenilles ou analogues et un ensemble convoyeur (21) monté sur le châssis (12), la partie avant de l'appareil étant munie à un niveau bas d'un unique moyen de pénétration (38) disposé normalement à la ligne d'axe (19) de l'appareil (10), l'ensemble convoyeur (21) comprenant une partie avant (24) qui peut pivoter de manière réglable autour d'un axe horizontal (76) par l'action de moyens indépendants (67, 68);

caractérisé en ce que la partie avant (24) de l'ensemble convoyeur (21) est apte à pivoter vers le haut jusqu'à une position sensiblement horizontale, le moyen de pénétration est apte à pivoter, indépendamment de la partie avant (24) du convoyeur, autour d'un axe horizontal transversal (40) disposé normalement à la ligne d'axe (19) et appartenant à la fois à la partie avant de l'ensemble convoyeur (21) et au moyen de pénétration (38), et des moyens de pivotement indépendants (54, 55) sont prévus pour faire osciller le moyen de pénétration (38) autour dudit axe horizontal transversal (40) d'un bout à l'autre d'un arc déterminé à l'avance.

2. Appareil selon la revendication 1, qui comprend des moyens de détection (240, 278) réagissant aux caractéristiques des matériaux agissant sur le moyen de pénétration (38) et contribuant avec les moyens d'oscillation (54, 55) à faire varier le genre d'oscillation du moyen de pénétration (38).

3. Appareil selon la revendication 1 ou la revendication 2 dans lequel les moyens indépendants (67, 68) sont commandés par les moyens de détection (278, 293) de façon à être mis en action lorsqu'une condition de fonctionnement déterminée à l'avance est remplie.

4. Appareil selon l'une quelconque des revendications précédentes, qui comprend un ensemble convoyeur primaire (21) et un ensemble convoyeur secondaire (22) comportant respectivement des parties de convoyeurs avant (24; 27) et arrière (25; 28) et étant disposés le long de la ligne d'axe (19) de telle manière que la partie arrière (25) de l'ensemble convoyeur primaire (21) est située au-dessus de la partie avant (27) de l'ensemble convoyeur secondaire (22), l'ensemble convoyeur primaire étant supporté par un moyen d'extension (58) s'étendant à partir du châssis (12) de façon à permettre essentiellement un déplacement axial entre les ensembles convoyeurs primaire et secondaire (21, 22).

5. Appareil selon la revendication 4, dans lequel ledit moyen d'extension comprend un moyen formant piston (58) qui contribue avec l'ensemble convoyeur primaire (21) et le châssis (12) à effectuer un déplacement longitudinal axial du convoyeur primaire par rapport au châssis de manière à faire avancer le moyen de pénétration (38).

6. Appareil selon la revendication 4 ou la revendication 5, dans lequel la partie arrière (25) de l'ensemble convoyeur primaire (21) comporte des premiers moyens de guidage (87) et le châssis (12) comporte des seconds moyens de guidage (89) destinés à s'emboîter dans lesdits premiers moyens de guidage pour permettre essentiellement un déplacement axial entre les ensembles convoyeurs primaire et secondaire (21, 22) et pour supporter la partie arrière de l'ensemble convoyeur primaire (21).

7. Appareil selon la revendication 5 ou la revendication 6, dans lequel le moyen formant piston (58) est déplacé par un appareil hydraulique (69) qui possède un circuit hydraulique (270, 293) associé destiné au piston, circuit recevant et évacuant du fluide et ayant des paramètres hydrauliques relatifs à la pression de fluide et à l'allure d'écoulement du fluide, et dans lequel les moyens de détection (240, 278) réagissent à au moins l'un des paramètres hydrauliques du circuit hydraulique associé au piston et comportent une sortie reliée à des moyens (245, 283) contrôlant le débit de fluide allant vers les moyens d'oscillation (54, 55).

8. Appareil selon l'une quelconque des revendications 2 à 7, qui comprend des moyens extensibles vers le bas (93, 94), vers les côtés (97, 98) ou vers le haut (108, 109), destinés à venir respectivement en contact avec une ou plusieurs zones superficielles du sol, zones superficielles opposées latéralement ou avec une zone superficielle supérieure située au-dessus de l'appareil de manière à augmenter les restrictions imposées à l'appareil contre tout déplacement.

9. Procédé continu de chargement et de transport de matériaux sur un appareil de chargement en continu, utilisant l'appareil conforme à la revendication 1, et consistant à mettre en oeuvre les opérations suivantes:

(a) faire fonctionner l'ensemble convoyeur (21) pour transporter les matériaux devant être chargés à partir de la partie avant (24) de l'ensemble convoyeur (21) jusqu'à une partie arrière de ce convoyeur, et

(b) faire avancer le moyen de pénétration (38) jusque dans les matériaux devant être chargés en faisant avancer la partie avant de l'appareil, et

(c) faire osciller de façon continue le moyen de pénétration (38) à l'aide des moyens indépendants de pivotement (54, 55), en fluidifiant de ce fait ces matériaux et en les obligeant à s'écouler de façon continue jusque sur l'ensemble convoyeur (21),

(d) tout en soulevant la partie avant (24) du convoyeur selon les exigences, pour faire passer le moyen de pénétration (38) en un trajet continu à travers les matériaux devant être chargés, et

(e) après chaque passage du moyen de pénétration à travers les matériaux devant être chargés, faire se rétracter la partie avant de l'appareil, et

(f) répéter les opérations de (a) à (e) jusqu'à ce que le chargement soit terminé.

FIG 1

FIG 2

EP 0 090 113 B1

1/7

FIG 3

FIG 4

FIG 5

FIG 6

FIG 7

FIG 8

FIG 9

FIG 10

FIG 13

FIG 14

FIG 15

FIG II

240

54,55
243
244
242
245
247
250
253
259
257
256
261
249
270
69
262
264
252  251
268  269
266
275
271
273  274

——— ——— ELECTRICAL LINES
—— —— — HYDRAULIC PILOT LINES
————— HYDRAULIC LINES

278

# FIG 12

54,55

282

280

279

283

285

288

284

291

295

309

290

293

69

305

297

67,68

313    308

321    310

301

299

322

323

317    324

311    307

319    318

281

M

315

ELECTRICAL LINES
HYDRAULIC PILOT LINES
HYDRAULIC LINES

FIG 16

FIG 17

TO VALVE 283 OF FIG 12

— — — ELECTRICAL LINES
- - - - - - - HYDRAULIC PILOT LINES
———— HYDRAULIC LINES